# EUROPEAN PATENT APPLICATION

(11) **EP 2 472 434 A1**
(43) Date of publication of application: **04.07.2012**
(21) Application number: 11195592.8
(22) Date of filing: 23.12.2011
(51) Int. Cl.: G06K 7/10

(54) **Indicia reading terminal having configurable operating characteristics**

(30) Priority: 30.12.2010 US 982295
(71) Applicant: Hand Held Products, Inc., Skaneateles Falls, New York 13153 (US)
(72) Inventor: Prasad, Kishan, Morristown, NJ 07962-2245 (US); Swamy, Manjunatha, Morristown, NJ 07962-2245 (US)
(74) Representative: Buckley, Guy Julian

(57) **Abstract**

An indicia reading terminal is describe that has a configurable mode, initiated by a trigger control, and in which can be implemented change to various operating characteristics of the terminal. In one embodiment, the trigger control comprises a trigger that is manually actuated by an end user to initiate and/or capture data and information encoded in a decodable indicia. The trigger is also utilized to permit the end user to select from among one or more operating characteristics, such as in one example wherein the trigger is used to scroll or toggle through the operating characteristics.

## Description

### CROSS REFERENCE TO RELATED APPLICATIONS

This application claims priority to U. S. Patent Application No. 12/982,295 filed December 30, 2010 entitled, "Indicia Reading Terminal Having Configurable Operating Characteristics." The priority of the above application is claimed and is incorporated herein by reference in its entirety.

### TECHNICAL FIELD

The subject matter of the present disclosure relates to indicia reading terminals and scanners, and more particularly, to embodiments of indicia reading terminals and scanners that are configured to permit changes in operating characteristics via a trigger control.

### BACKGROUND

Indicia reading terminals and scanners (collectively, "terminals") are available in multiple varieties. Well-known among the varieties is the gun style terminal as commonly seen at retail store checkout counters. Other terminals are also available that provide enhanced functions, have keyboards, and displays, and include advanced networking communication capabilities.

These terminals are useful to read and decode the information encoded in decodable indicia. Such decodable indicia are utilized generously, from encoding shipping and tracking information for packages to any number of forms and documents including, but not limited to, tax forms, order forms, transaction forms, survey forms, delivery forms, prescriptions, receipts, newspapers, product documents, reports, and the like. Changes in the configuration of these terminals are often required during normal operation such as to accommodate different types of decodable indicia, packages, items, and related changes that are necessary to accommodate and facilitate operation in the work environment.

Conventional devices are configured to implement such changes using a number of methods. In one method, the terminal is used to scan or image a programming indicia, which is particularly arranged with information that changes the configuration of the terminal. This method often requires that the end user have available the relevant programming indicia, and in one example this programming indicia is found in a user manual or catalog, in which the end user must search to find the programming indicia for the desired configuration. In another method, the terminal must connect with a companion device such as a computer or register device. Often the terminal and the computer communicate via a configuration or set-up tool, which requires the end user to not only have access to the companion device, but also to operate simultaneously the terminal and the companion device to implement the desired configuration for the terminal.

There is therefore a need for a terminal in which the operating characteristics can be changed, but that is configured to implement such changes independent of programming indicia or companion devices.

### SUMMARY

There is described below embodiments of terminals and methods of operation that can enter a configurable state in which operating characteristics can be changed by way of the trigger control.

In one embodiment, a method for configuring an indicia reading terminal, said method comprising initiating capture of data from a decodable indicia, determining whether the decodable indicia is present, wherein if the decodable indicia is not present, initiating a configurable mode comprising a plurality of pre-determined configurations, and implementing a configuration change in response to a selection from among the pre-determined configurations, wherein the pre-determined configuration is identified by an operator initiated command, and wherein the operator initiated command is generated via a trigger control disposed on the indicia reading terminal.

In another embodiment, a method for configuring an indicia reading terminal, comprising identifying a trigger signal, activating a data capture device in response to the trigger signal, detecting a mode change prompt; enabling a configurable mode on the indicia reading terminal in response to the mode change prompt, and applying in the configurable mode a pre-determined configuration in response to an operator initiated command generated via a trigger control disposed on the indicia reading terminal.

In yet another embodiment, a system comprising an indicia reading terminal comprising a data capture device that is configured to capture information encoded in a decodable indicia, an actuation device coupled to the data capture device, and a housing encapsulating the data capture device and the actuation device, wherein the system is operative in response to an operator initiated command to initiate a configurable mode comprising a plurality of pre-determined configurations, wherein the system is further operative to implement a configuration change in response to a selection from among the pre-determined configurations, wherein the pre-determined configuration is identified by a scroll signal, and wherein the scroll signal and the operator initiated command are generated via a trigger control disposed on the indicia reading terminal.

### BRIEF DESCRIPTION OF THE DRAWINGS

So that the manner in which the above recited features of the present invention can be understood in detail, a more particular description of the invention briefly summarized above, may be had by reference to the embodiments, some of which are illustrated in the accompanying drawings. It is to be noted, however, that the appended drawings illustrate only typical embodiments of this invention and are therefore not to be considered limiting of its scope, for the invention may admit to other equally effective embodiments. Moreover, the drawings are not necessarily to scale, emphasis generally being placed upon illustrating the principles of certain embodiments of invention.

Thus, for further understanding of the concepts of the invention, reference can be made to the following detailed description, read in connection with the drawings in which:

Fig. 1 is a schematic diagram of an exemplary embodiment of an indicia reading terminal;

Fig. 2 is another exemplary embodiment of an indicia reading terminal;

Fig. 3 is yet another exemplary embodiment of an indicia reading terminal;

Fig. 4 flow diagram of an example of a method for changing the operating characteristics of an indicia reading terminal, such as the indicia reading terminals of Figs. 1-3;

Fig. 5 is a flow diagram another example of a method for changing the operating characteristics of an indicia reading terminal, such as the indicia reading terminals of Figs. 1-3;

Fig. 6 is a flow diagram of an example of a method for implementing a configurable state on an indicia reading terminal, such as the indicia reading terminals of Figs. 1-3;

Fig. 7 is a perspective, exploded, assembly view of an example of an imaging module for use in the indicia reading terminals of Figs. 1 and 2;

Fig. 8 is a perspective, assembled view of another example of an imaging module such as the imaging module of Fig. 7, for use in the indicia reading terminals of Fig. 1 and 2;

Fig. 9 is a perspective view of an indicia reading terminal incorporating an imaging module such as the imaging module of Figs. 7 and 8; and

Fig. 10 is a block diagram of an exemplary hardware platform for implementation in an indicia reading terminal such as the indicia reading terminal of Figs. 1, 2, and 9.

Fig. 11 is a block diagram of another exemplary hardware platform for implementation in an indicia reading terminal such as the indicia reading terminal of Figs. 1 and 3.

### DETAILED DESCRIPTION

Broadly stated, the present disclosure describes embodiments of an indicia reading terminal that are selectively configurable by way of, for example, various operating characteristics, wherein changes among and between the operating characteristics is effectuated without interaction with a companion device (e.g., a computer). While the concepts that are described below are generally applicable to a variety of indicia reading terminals (and related handheld devices), the concepts are discussed in context of those terminals that employ manually-activated trigger controls. These trigger controls are favored as one medium through which an end user interacts with and ultimately operates the indicia reading terminal. In response to actuation of the trigger control, for example, the indicia reading terminal can effectively translate information encoded in a decodable indicia.

At a relatively high level, to further facilitate operation of the indicia reading terminals, the inventors propose to utilize the trigger control to additionally modify and change certain operating characteristics of the indicia reading terminal. This feature is beneficial to facilitate re-configuration of the terminal with operating characteristics that may be required and frequently implemented during normal operation and/or related to a variety of applications (e.g., warehouse and retail applications). These changes can include changes between operating modes such as between a presentation mode and a manual trigger mode; changes in configurations such as between one or more communication interfaces (e.g., USB HID, Serial, and RS-232); changes in settings such as enabling and disabling certain symbology; as well as varying other settings such as volume, lighting intensity, and the like and as applicable to the terminal construction and application.

One concept of the present disclosure enables an indicia reading terminal to be placed in a configurable or first state in response to actuation of the trigger control. In one example, this actuation can generate a trigger signal that initiates the configurable state, wherein the trigger signal is an electrical input (e.g., analog or digital) processed by relevant and recognized circuitry of the indicia reading terminal. Initiation can be accompanied by an indication to the user that the device has entered the configurable state such as by activating a sensory indicator (e.g., a light and/or an audible signal). Use of the sensory indicator is particularly beneficial for those indicia reading terminals that do not have a screen, display, or other features through which information, such as textual or visual messages, is conveyed to the end user. In one example, the concepts can be implemented on point-of-sale (POS) devices, which are often devoid of any display screen because of their simple structure.

The configurable state permits the end user to further select from among a plurality of operating characteristics, with one implementation employing the trigger control to toggle or scroll through a plurality of different operating characteristics. In one example, trigger signals generated in the configurable state may indicate a selection of one or more different settings, different configurations, and different operating modes. This feature permits the end user to change the operation of indicia reading terminal such as from a first configuration or setting to a second configuration or setting simply by actuating the trigger device in succession and/or in varying patterns or sequences.

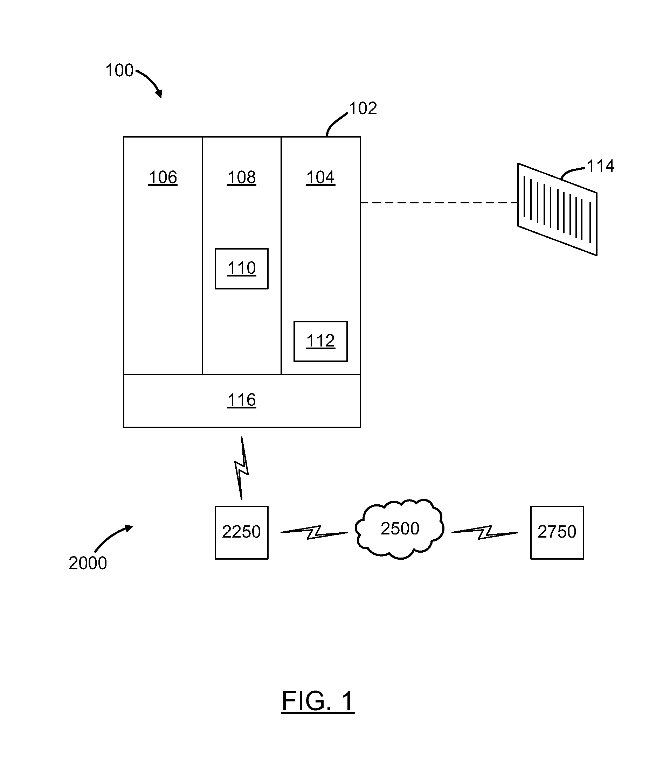

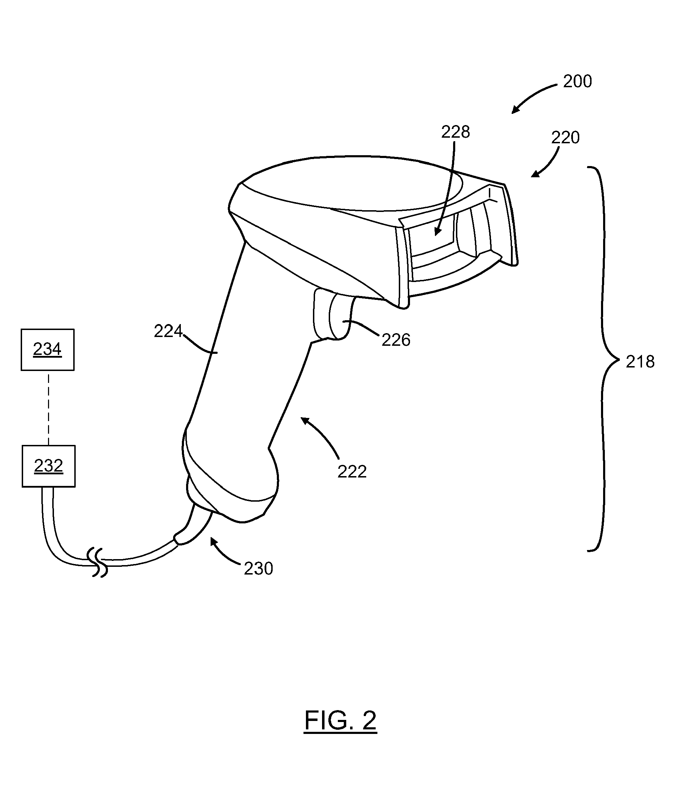

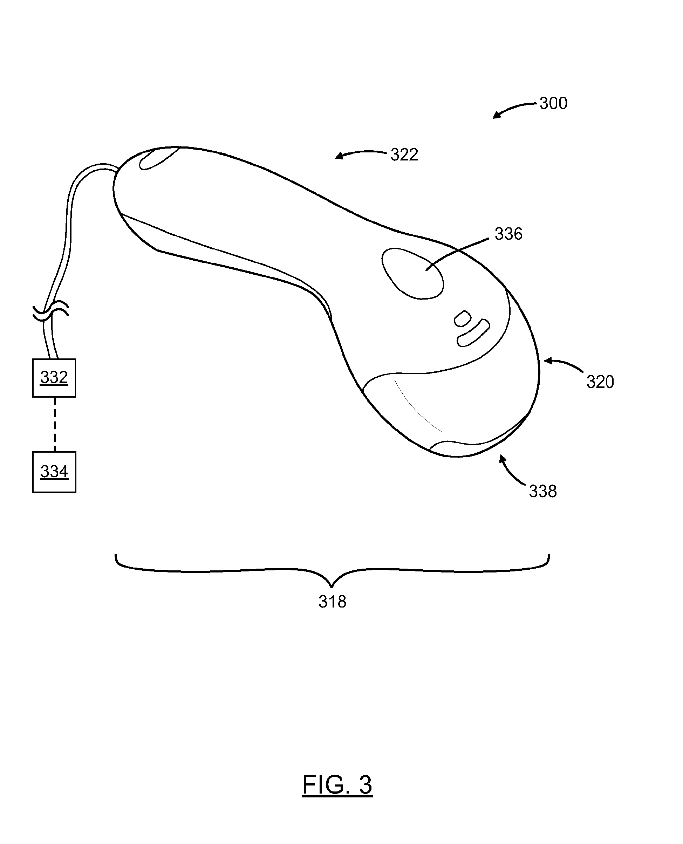

For further understanding of this and other concepts of the present disclosure, briefly described above, reference can be had to Figs. 1-3, in which is illustrated an exemplary embodiment of an indicia reading terminal 100 ("the terminal 100"). The terminal 100 is depicted in schematic form in Fig. 1. In Figs. 2 and 3, the terminal is shown as embodied with a particular form factor indicative of terminals used for, e.g., POS applications. These form factors include a trigger grip (Fig. 2) and a pistol grip (Fig. 3).

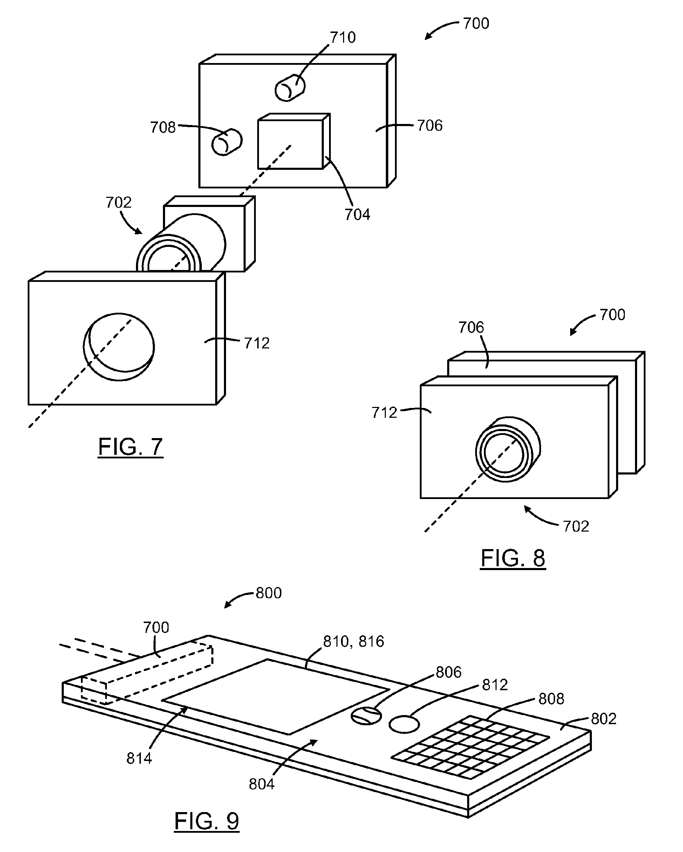

Focusing first on Fig. 1, there is shown that the terminal 100 can comprise a device structure 102 with a decoding module 104, a processing module 106 such as a central processing unit ("CPU"), and a storage module 108 such as memory that has at least one zone 110, e.g., for storing executable instructions that define various settings, configurations, and operating modes for the terminal 100. The decoding module 104 can comprise a data capture device 112 that is configured to capture information encoded in decodable indicia, generally demarcated by the numeral 114 and in which may be included a bar code and/or related symbology. The data capture device 112 can be constructed of elements and with features consistent with laser scanners, which comprise a laser that impinges on the decodable indicia 114 to decode the information, and optical readers that have an imaging module (see, e.g., the imaging module 228 (Fig. 2)) that capture an image of the decodable indicia 114. The terminal 100 also includes an actuation device 116 that is used by an end user to effectuate operation of the terminal 100. In one embodiment, the actuation device 116 is used to decode the information stored in the decodable indicia 114 such as by energizing the laser and/or the image module for capturing the image data. There are of course other components and hardware that can facilitate decoding of the decodable indicia 114, some of which are discussed in more detail in connection with the optical reader illustrated in Figs. 8-11 and described below.

The terminal 100 can be part of a system 2000 having a local server 2250, a remote server 2750, and a network 2500 that couples the local server 2250 and the remote server 2750. This configuration of the system 2000 can be utilized for processing the captured image data, and in one configuration one or more of the local server 2250 and the remote server 2750 is utilized to entirely process the captured image data and operate the terminal 100 in a manner consistent with the disclosure below. In one embodiment, one or more of the processing module 106 and the storage module 108, or complementary ones thereof, can be located outside of the terminal 100 so as to permit data and information captured by the terminal 100 to be transferred from the terminal 100, e.g., to the corresponding storage module 108 for immediate and/or further processing of the captured image data. In another embodiment, image processing steps and configuration altering steps disclosed, described, and contemplated herein can be distributed as between the terminal 100, the local server 2250, and the remote server 2750, with still other embodiments being configured for the image processing steps to be executed entirely by the terminal 100.

Symbology, coding, and other aspects of the decodable indicia (e.g., the decodable indicia 114) may be selected in accordance with configuration and capabilities of the processing module 106. In one embodiment, the processing module 106 can be any type of CPU or microprocessor with exemplary functions designed to decode machine readable types of symbology, and particularly in connection with symbology found in the captured document image data. Decoding is a term used to describe the successful interpretation of machine readable indicia contained in an image captured by the data capture device 112 and/or on which impinges the laser.

The code has data or information encoded therein. Information respecting various reference decode algorithms are available from various published standards, such as by the International Standards Organization ("ISO"). Examples may comprise one dimensional (or linear) symbologies, stacked symbologies, matrix symbologies, Composite symbologies, or other machine readable indicia. One dimensional (or linear) symbologies which may include very large to ultra-small, Code 128, Interleaved 2 of 5, Codabar, Code 93, Code 11, Code 39, UPC, EAN, MSI, or other linear symbologies. Stacked symbologies may include PDF, Code 16K, Code 49 or other stacked symbologies. Matrix symbologies may include Aztec, Datamatrix, Maxicode, QR Code or other 2D symbologies. Composite symbologies may include linear symbologies combined with stacked symbologies. Other symbology examples may comprise OCR-A, OCR-B, MICR types of symbologies. UPC/EAN symbology or barcodes are standardly used to mark retail products throughout North America, Europe and several other countries throughout the world.

In Fig. 2, there is shown an exemplary embodiment of an indicia reading terminal 200 ("the terminal 200"), in which can be implemented the various components identified in Fig. 1. The terminal 200 has a form factor 218 with a head portion 220 and a handle portion 222, which is configured with a hand grip 224 and a trigger 226. An imaging module 228 is disposed in the head portion 220. The terminal 200 is also configured with a connectivity device 230, illustrated in the present example as a wired connection 232 coupled to a companion device 234 such as might be found in a POS application, e.g., wherein the wired device is coupled to a register and/or peripheral data capture devices. Other configurations of the connectivity device 230, however, may utilize wireless communication technology and/or contact-type features that do not require wires and/or the wired connection 232. In certain applications of the terminal 200, for example, the companion device 234 may be a docking station with corresponding mating contacts and/or connectors that are useful to exchange such things as power and data, including image data captured by the imaging module 228.

Another exemplary embodiment of an indicia reading terminal 300 ("the terminal 300") is shown in Fig. 3. Like numerals are used as between Figs. 2 and 3, but the numerals are increased by 100 (e.g., 200 in Fig. 2 is now 300 in Fig. 3). For example, the terminal 300 comprises a form factor 318, having in one embodiment a head portion 320 and a handle portion 322, and a connectivity device 230 that facilitates communication of the terminal 300 with a companion device 334. The terminal 300 further includes a push button 336, which in one example is positioned on the terminal 300 so that an end user can engage the push button 336 when grasping the hand grip 324. A laser module 338 is used in place of the imaging module (e.g., the imaging module 228 (Fig.2) and, when activated by, e.g., the push button 336, generates laser light to capture information from the decodable indicia (not shown).

With continued reference to both Figs 2 and 3, each of the terminal 200 and the terminal 300 can be configured to effectuate the concepts disclosed herein. To simplify the discussion that follows below, reference will be made generally to components of the terminals 200 and 300. However, this generalization is intended to apply broadly across the various configurations and embodiments of terminals contemplated within the scope and spirit of the present disclosure, including, but not limited to, the terminals 200 and 300 described above. For example, as used in context of the discussion that follows below, the following components will be identified as follows: a terminal (e.g., the terminal 200 and 300), an actuation device (e.g., the trigger 226 and the push button 336), and a data capture device (e.g., the imaging module 228 and the laser module 338).

In one embodiment, to capture image data, the terminal can be configured to respond to actuation of the actuation device. The end user can depress the actuation device, moving the actuation device from a default or inactive position to an actuated or active position. The latter, i.e., the active position, can energize the data capture device to capture the image data. The terminal can also be configured to identify the decodable indicia in the captured image data. In one example, if there is no decodable indicia present in the captured image data, and if the actuation device is still in its actuated position, then the terminal can be configured to enter the configurable mode in which the end user can change one or more of the operating characteristics of terminal.

In the configurable mode, the end user can use the actuation device such as by actuating the actuation device between the default position and the active position to select from among various operating characteristics of the terminal. In one embodiment, the actuation can occur by actuating the actuation device so that each successive change between the default position and the active position is used to effectively "scroll" through any one of the plurality of operating characteristics available as part of the terminal. In other examples, a particular sequence of such changes (e.g., changes between the default position and the active position) may be used to scroll through the various operating characteristics, wherein the sequence identifies the desired or selected operating characteristics for the terminal. By way of one example, one actuation of the actuation device may indicate a first operating characteristic, two actuations may indicate a second operating characteristic, three actuations may indicate a third operating characteristic, and so forth to provide to the end user all of the desired operating characteristics for the terminal.

The actuation device can also be used to instruct the selection of the operating characteristics and, in one example, the desire to exit the configurable mode. Additional actuations of the actuation device such as in single, random, or pre-defined sequence, can cause the terminal to exit the configurable mode and permit implementation of the terminal in another mode or to capture and decode the information in the decodable indicia. In one embodiment, this change out of the configurable mode (and/or the selection of the desired operating characteristic) may be realized by way of a timing circuit or other relevant measure such as might be related to the time from which the actuation device enters one or more of the default position and the active position. In one example, the selection of the desired operating characteristic may be configured within a certain period of time, e.g., 5 seconds, after the actuation device enters its default position.

As discussed above, the configurable mode can be used to implement on the terminal various settings, configurations, and modes. In one embodiment, the terminal can be changed between a presentation mode and a manual-trigger mode. The former, i.e., the presentation mode, is often associated with laser scanning and imaging devices compatible with POS system. These devices can be found in retail applications, wherein the terminal 200 in the presentation mode is configured so that the decodable indicia (as found on, e.g., a product) is moved proximate the data capture device to decode the information encoded therein. Comparatively, in the manual-trigger mode, the terminal is often mobile, thereby permitting the end user to move the terminal proximate the decodable indicia. This movement can place the data capture device in a location suited to capture an image of the decodable indicia or, for laser-scanning devices, the location is suited to direct the laser onto the decodable indicia.

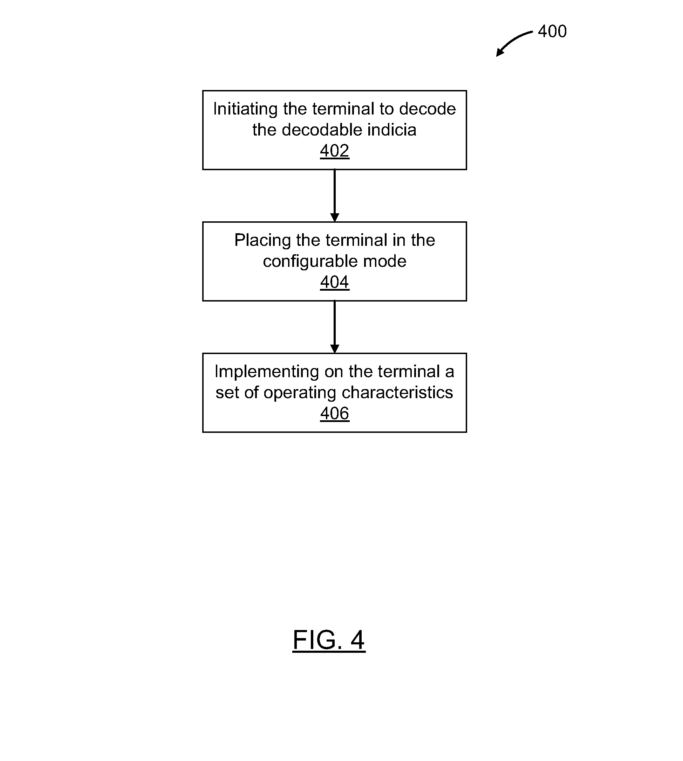

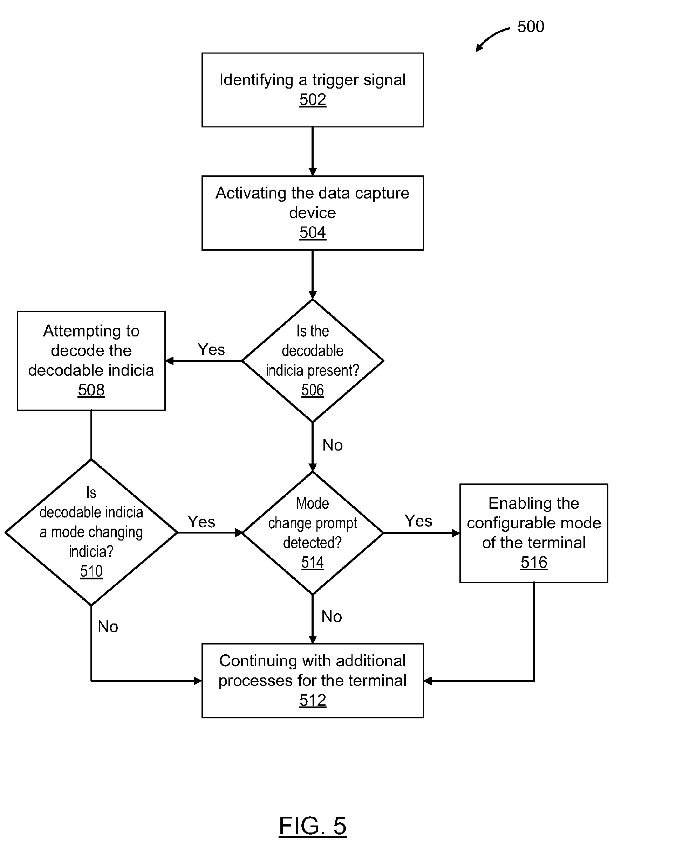

For continued discussion and implementation of the terminals 100, 200, and 300 (collectively, "the terminals"), reference now turns to Figs. 4 and 5, in which is illustrated various methods of implementing the concepts described and contemplated herein. Generally the methods describe one or more steps that are useful to employ the actuation device 116 (Fig. 1), and particularly the trigger 226 (Fig. 2) and the push button 336 (Fig. 3) to modify the operating characteristics of the terminals. The steps can be embodied as executable instructions, including firmware and hardware, which are executed by, e.g., the processing module 106 (Fig. 1).

Fig. 4 illustrates one exemplary embodiment of a method 400 for changing the operating characteristics of the terminal. The method 400 can comprise, at block 402, initiating the terminal to decode the decodable indicia, and at block 404, placing the terminal in the configurable mode. The method 400 can also comprise, at block 406, implementing on the terminal a set of operating characteristics.

As discussed above, one concept of the present disclosure utilizes the actuation device (e.g., the trigger 226 and the push button 336), which is implemented to capture data and information from the decodable indicia. Particular to one embodiment of the method 400, the proposed improvement capitalizes on the trigger signal, which exists and is prevalent on many different types of terminals. For example, other components such as the imaging module or complimentary laser elements are responsive to the trigger signal. Thus, implementing the method 400 does not effectively change the core operation or principles of the terminal. The end user actuates the trigger control, and in one implementation the terminal can be positioned in any particular direction such as at the ground, in the air, or an area in which there is no decodable indicia. When the terminal is part of a POS system, such as at a cash register or check-out terminal, the end user can engage the terminal, such as by grasping and picking up the terminal, and actuate the trigger control.

The terminal can be placed in the configurable mode in response to the presence and/or the absence of the decodable indicia. In one embodiment, a decodable indicia may used that is effective at initiating the configurable mode. This decodable indicia may include information that, when decoded by the terminal, causes the terminal to permit the end user to change amongst and between the various configurations and settings of the terminal. Likewise, it is contemplated that the same or different decodable indicia, such as a decodable indicia in which is encoded different or additional information, can be used to place the terminal back in its operating mode. The inventors propose, for example, the use of a "mode-changing indicia" that replaces the myriad of individual decodable indicia that may be used conventionally to effectuate changes in the operating characteristics of the terminal.

In another embodiment, the terminal is placed in the configurable mode in response to the absence of the decodable indicia. The terminal may be adapted, for example, to attempt to decode in response to the trigger signal. Absence of the decodable indicia will often result in no data or information being acquired, thereby resulting in one example as a negative or unsuccessful decode. This negative or unsuccessful result may place the terminal in the configurable mode. In one example, the configurable mode does not permit additional attempts to decode until the terminal exits the configurable mode. In another example, the terminal may remain in the configurable mode of a set period of time, the expiration of which change the terminal from the configurable mode to another mode such as would permit additional attempts to decode. In yet another example, the terminal may be adapted to change from the configurable mode in response to an input, which may be the same or different as the trigger signal.

The terminal can comprise a variety of operating characteristics from which the set can be selected and implemented on the terminal. In one embodiment, the terminal can be pre-configured with one or more of the operating characteristics such as in a listing through which the end user can "scroll," as discussed above. This listing can be expanded to include additional operating characteristics that might be helpful to the end user and which are compatible with selection by way of the trigger control. Exemplary expansion techniques can include updates to firmware and/or software on the terminal. It is likewise contemplate that the listing can be stored remotely such as in a database or other storage medium or repository, to which the terminal can communicate and access the listing.

These concepts can be further implemented as described in the next example, illustrated in Fig. 5, wherein there is depicted another exemplary embodiment of a method 500 for changing the operating conditions of the terminal. In Fig. 5, the method 500 is shown to comprise, at block 502, identifying a trigger signal, at block 504, activating the data capture device, and, at block 506, determining the presence of the decodable indicia. If the decodable indicia is present, then the method 500 continues, at block 508, attempting to decode the decodable indicia, at block 510, determining whether the decodable indicia is a mode-changing indicia. If the decodable indicia is not the mode-changing indicia, and example of which is discussed above, then the method 500 can continue at block 512, continuing with additional processes for the terminal. On the other hand, if the decodable indicia is a mode-changing indicia or, in one alternative, in the absence of the decodable indicia, initiation of other features of the method 500 can occur, including, but not limited to, at block 514, identifying a mode change prompt and, at block 516, enabling the configurable mode such as in response to the mode change prompt.

The mode change prompt can utilize the existing trigger signal. In one embodiment, the mode change prompt may be the result of the end user placing the trigger control in the active position for a period of time beyond the time required to identify the presence of the decodable indicia (at block 506). In one example, the mode change prompt is the measure of the period of time, and more particularly the mode change prompt may be configured to indicate when the period of time exceeds a pre-determined threshold (e.g., 5 seconds).

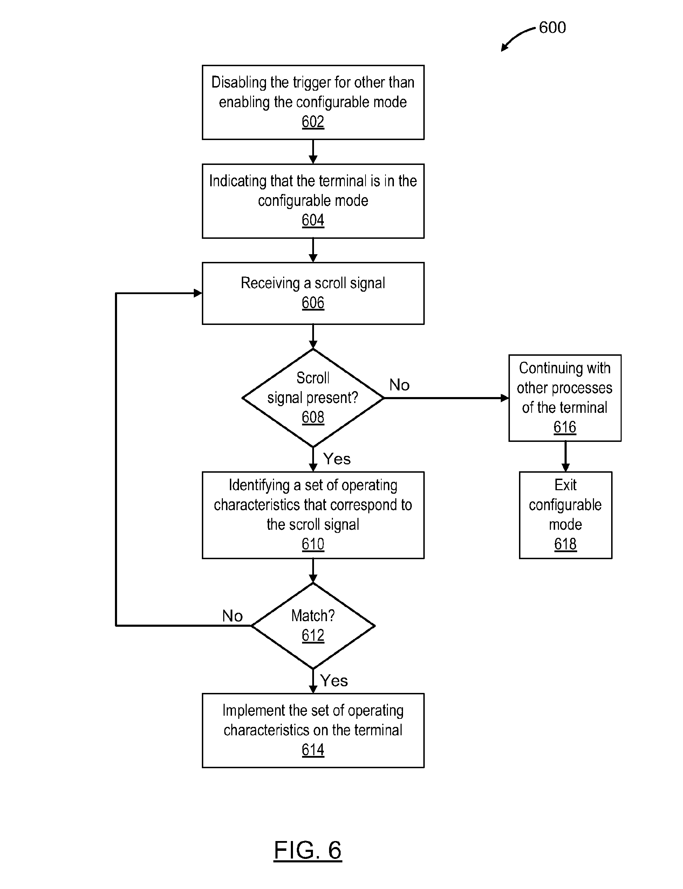

Referring next to Fig. 6, a flow diagram is illustrated that describes an example of a method 500 for reconfiguring the terminal, such as would occur at block 516 (Fig. 4), which identifies the step for enabling the configurable mode. The method 600 comprises, at block 602, disabling the trigger for other than selection of operating characteristic and, at block 604, indicating that the terminal is in the configurable mode. Blocks 602 and 604, while being illustrated in consecutive locations in Fig. 6, can likewise occur simultaneously or substantially simultaneously as desired. Moreover, the latter block, i.e., block 604, can include various other steps such as steps to activate an indicator (e.g., a light or audible alarm) or, for those terminals equipped with a display to provide a text message to the end user.

The method 600 also comprises, at blocks 606 and 608, receiving a scroll signal, wherein in one example the scroll signal is generated by actuation of the actuation device (e.g., the trigger 226 and the push button 336). The scroll signal can represent a single actuation of the trigger control, a sequence of trigger actuations, as well as combinations of trigger actuations of similar or different durations. Responsive to the scroll signal, the method 600 comprises, at blocks 610 and 612, identifying a set of operating characteristics that correspond to the scroll signal and, at block 614, implementing the set on the terminal. In one embodiment, in the event that the scroll signal does not match any of the pre-defined scroll-signals assigned to the sets of operating characteristics, the method 600 can wait for a different scroll signal. Moreover, while not illustrated in the present example, the method 600 in one implementation can provide an indicator to the end user that the scroll signal was not identified. This indicator can prompt the end user to actuate the trigger again, in the same or different manner or sequence, so as to generate a different scroll signal.

In one embodiment, if no scroll signal is received in the configurable mode, the method 600 can comprise, at block 616, continuing with other processes of the terminal. This can include, and illustrated as block 618, exiting the configurable mode such as by automatically terminating the configurable mode, e.g., after 5 seconds if no scroll signal is received. An indicator can also be provided in such instance, thereby informing the end user that the terminal has exited the configurable mode for the terminal.

Further details of indicia reading terminals such as the terminal 100 and 200 of Figs. 1 and 2 are illustrated in Figs. 7-10 and discussed in more detail below. There is provided in Figs. 7 and 8 an example of an imaging module 700 for use as, e.g., the imaging module 228 (Fig. 2). In one embodiment of the terminals of the present disclosure, the imaging module 700 can comprise a focus element 702, and an image sensor integrated circuit 704 that is disposed on a printed circuit board 706 together with an illumination pattern light source bank 708 ("the illumination bank"), and aiming pattern light source bank 710 ("the aiming bank"). Here, each of the illumination bank 708, and the aiming bank 710 is provided as a single light source. The imaging module 700 can also include an optical plate 712 that has optics for shaping light from illumination bank 708 and the aiming bank 710 into predetermined patterns.

Imaging module 700 can be disposed in the indicia reading terminals such as the terminal 100 and 200 (Figs. 1 and 2) and the exemplary embodiment of an indicia reading terminal 800, which is shown in Fig. 9. The indicia reading terminal 800 can include a hand held housing 802 that supports a user input interface 804 with a pointer controller 806, a keyboard 808, a touch panel 810, and a trigger 812. The hand held housing 802 can also support a user output interface 814 with a display 816.

Exemplary devices that can be used for devices of the user input interface 804 are generally discussed immediately below. Each of these is implemented as part of, and often integrated into the hand held housing 802 so as to permit an operator to input one or more operator initiated commands. These commands may specify, and/or activate certain functions of the indicia reading terminal. They may also initiate certain ones of the applications, drivers, and other executable instructions so as to cause the indicia reading terminal 800 to operate in an operating mode.

Devices that are used for the point controller 806 are generally configured so as to translate the operator initiated command into motion of a virtual pointer provided by a graphical user interface ("GUI") of the operating system of the indicia reading terminal 800. It can include devices such as a thumbwheel, a roller ball, and a touch pad. In some other configurations, the devices may also include a mouse, or other auxiliary device that is connected to the indicia reading terminal 800 by way of, e.g., via wire or wireless communication technology.

Implementation of the keyboard 808 can be provided using one or more buttons, which are presented to the operator on the hand held housing 802. The touch panel 810 may supplement, or replace the buttons of the keyboard 808. For example, one of the GUIs of the operating system may be configured to provide one or more virtual icons for display on, e.g., the display 816, or as part of another display device on, or connected to the indicia reading terminal 800. Such virtual icons (e.g., buttons, and slide bars) are configured so that the operator can select them, e.g., by pressing or selecting the virtual icon with a stylus (not shown) or a finger (not shown).

The virtual icons can also be used to implement the trigger 812. On the other hand, other devices for use as the trigger 812 may be supported within, or as part of the hand held housing 802. These include, but are not limited to, a button, a switch, or a similar type of actionable hardware that can be incorporated into the embodiments of the indicia reading terminal 800. These can be used to activate one or more of the devices of the portable data terminal, such as the bar code reader discussed below.

Displays of the type suited for use on the indicia reading terminal 800 are generally configured to display images, data, and GUIs associated with the operating system and/or software (and related applications) of the indicia reading terminal 800. The displays can include, but are not limited to, LCD displays, plasma displays, LED displays, among many others and combinations thereof. Although preferred construction of the indicia reading terminal 800 will include devices that display data (e.g., images, and text) in color, the display that is selected for the display 816 may also display this data in monochrome (e.g., grayscale). It may also be desirable that the display 816 is configured to display the GUI, and in particular configurations of the indicia reading terminal 800 that display 816 may have an associated interactive overlay, like a touch screen overlay on touch panel 810. This permits the display 816 to be used as part the GUI so as to permit the operator to interact with the virtual icons, the buttons, and other implements of the GUI to initiate the operator initiated commands, e.g., by pressing on the display 816 and/or the touch panel 810 with the stylus (not shown) or finger (not shown).

The hand held housing 802 can be constructed so that it has a form, or "form factor" that can accommodate some, or all of the hardware and devices mentioned above, and discussed below. The form factor defines the overall configuration of the hand held housing 802. Suitable form factors that can be used for the hand held housing 802 include, but are not limited to, cell phones, mobile telephones, personal digital assistants ("PDA"), as well as other form factors that are sized and shaped to be held, cradled, and supported by the operator, e.g., in the operator's hand(s) as a gun-shaped device. One exemplary form factor is illustrated in the embodiment of the indicia reading terminal 800 that is illustrated in the present Figs. 2 and 8.

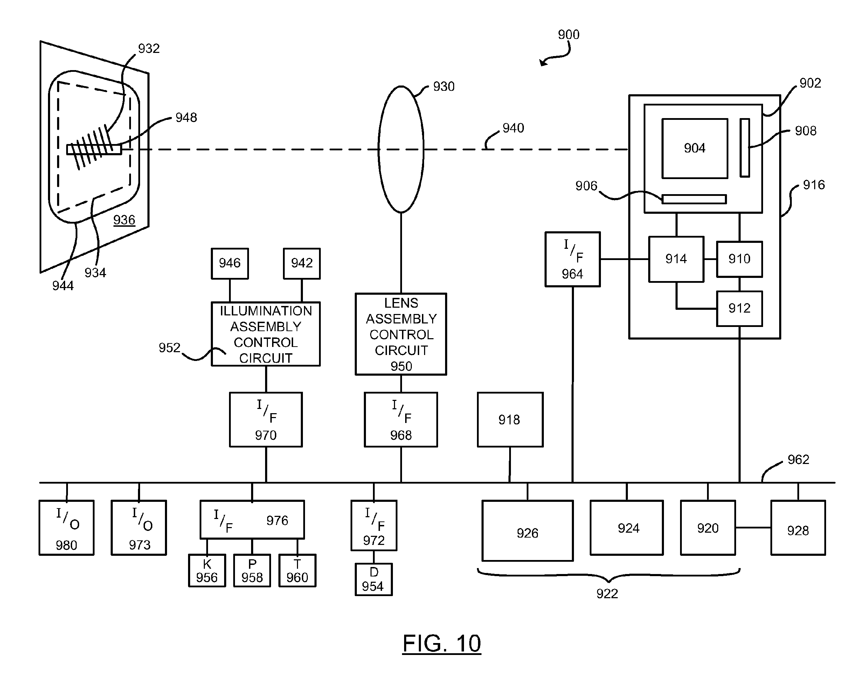

An exemplary hardware platform for use in, e.g., the terminals 100, 200, and 800, is illustrated and described with reference to the schematic block diagram of Fig. 10. In Fig. 10, it is seen that an indicia reading terminal 900 ("the terminal") can include an image sensor 902 comprising a multiple pixel image sensor array 904 ("the image sensor array") having pixels arranged in rows and columns of pixels, including column circuitry 906 and row circuitry 908. Associated with the image sensor 902 can be amplifier circuitry 910, and an analog to digital converter 912 which converts image information in the form of analog signals read out of image sensor array 904 into image information in the form of digital signals. Image sensor 902 can also have an associated timing and control circuit 914 for use in controlling, e.g., the exposure period of image sensor 902, and/or gain applied to the amplifier 910. The noted circuit components 902, 910, 912, and 914 can be packaged into an image sensor integrated circuit 916. In one example, image sensor integrated circuit 916 can be provided by an MT9V022 image sensor integrated circuit available from Micron Technology, Inc. In another example, image sensor integrated circuit 916 can incorporate a Bayer pattern filter. In such an embodiment, CPU 918 prior to subjecting a frame to further processing can interpolate pixel values intermediate of green pixel values for development of a monochrome frame of image data. In other embodiments, red, and/or blue pixel values can be utilized for the monochrome image data.

In the course of operation of terminal 900 image signals can be read out of image sensor 902, converted and stored into a system memory such as RAM 920. A memory 922 of terminal 900 can include RAM 920, a nonvolatile memory such as EPROM 924, and a storage memory device 926 such as may be provided by a flash memory or a hard drive memory. In one embodiment, terminal 900 can include CPU 918 which can be adapted to read out image data stored in memory 922 and subject such image data to various image processing algorithms. Terminal 900 can include a direct memory access unit (DMA) 928 for routing image information read out from image sensor 902 that has been subject to conversion to RAM 920. In another embodiment, terminal 900 can employ a system bus providing for bus arbitration mechanism (e.g., a PCI bus) thus eliminating the need for a central DMA controller. A skilled artisan would appreciate that other embodiments of the system bus architecture and/or direct memory access components providing for efficient data transfer between the image sensor 902 and RAM 920 are within the scope and the spirit of the invention.

Referring to further aspects of terminal 900, terminal 900 can include an imaging lens assembly 930 for focusing an image of a form barcode 932 located within a field of view 934 on a substrate 936 onto image sensor array 904. Imaging light rays can be transmitted about an optical axis 940. The imaging lens assembly 930 can be adapted to be capable of multiple focal lengths and/or multiple best focus distances.

Terminal 900 can also include an illumination pattern light source bank 942 for generating an illumination pattern 944 substantially corresponding to the field of view 934 of terminal 900, and an aiming pattern light source bank 946 for generating an aiming pattern 948 on substrate 936. In use, terminal 900 can be oriented by an operator with respect to a substrate 936 bearing the form barcode 932 in such manner that aiming pattern 948 is projected on the form barcode 932. In the example of Fig. 9, the form barcode 932 is provided by a 1D bar code symbol. Form barcode could also be provided by 2D bar code symbols, stacked linears, or optical character recognition (OCR) characters, etc.

Each of illumination pattern light source bank 942 and aiming pattern light source bank 946 can include one or more light sources. The imaging lens assembly 930 can be controlled with use of lens assembly control circuit 950 and the illumination assembly comprising illumination pattern light source bank 942 and aiming pattern light source bank 946 can be controlled with use of illumination assembly control circuit 952. Lens assembly control circuit 950 can send signals to the imaging lens assembly 930, e.g., for changing a focal length and/or a best focus distance of imaging lens assembly 930. This can include for example providing a signal to the piezoelectric actuator to change the position of the variable position element of the focus element discussed above. Illumination assembly control circuit 952 can send signals to illumination pattern light source bank 942, e.g., for changing a level of illumination output by illumination pattern light source bank 942.

Terminal 900 can also include a number of peripheral devices such as display 954 for displaying such information as image frames captured with use of terminal 900, keyboard 956, pointing device 958, and trigger 960 which may be used to make active signals for activating frame readout and/or certain decoding processes. Terminal 900 can be adapted so that activation of trigger 960 activates one such signal and initiates a decode attempt of the form barcode 932.

Terminal 900 can include various interface circuits for coupling several of the peripheral devices to system address/data bus (system bus) 962, for communication with CPU 918 also coupled to system bus 962. Terminal 900 can include interface circuit 964 for coupling image sensor timing and control circuit 914 to system bus 962, interface circuit 968 for coupling the lens assembly control circuit 950 to system bus 962, interface circuit 970 for coupling the illumination assembly control circuit 952 to system bus 962, interface circuit 972 for coupling the display 954 to system bus 962, and interface circuit 976 for coupling the keyboard 956, pointing device 958, and trigger 960 to system bus 962.

In a further aspect, terminal 900 can include one or more I/O interfaces 973, 980 for providing communication with external devices (e.g., a cash register server, a store server, an inventory facility server, a peer terminal, a local area network base station, a cellular base station, etc.). I/O interfaces 973, 980 can be interfaces of any combination of known computer interfaces, e.g., Ethernet (IEEE 802.3), USB, IEEE 802.11, Bluetooth, CDMA, GSM, IEEE 1394, RS232 or any other computer interface.

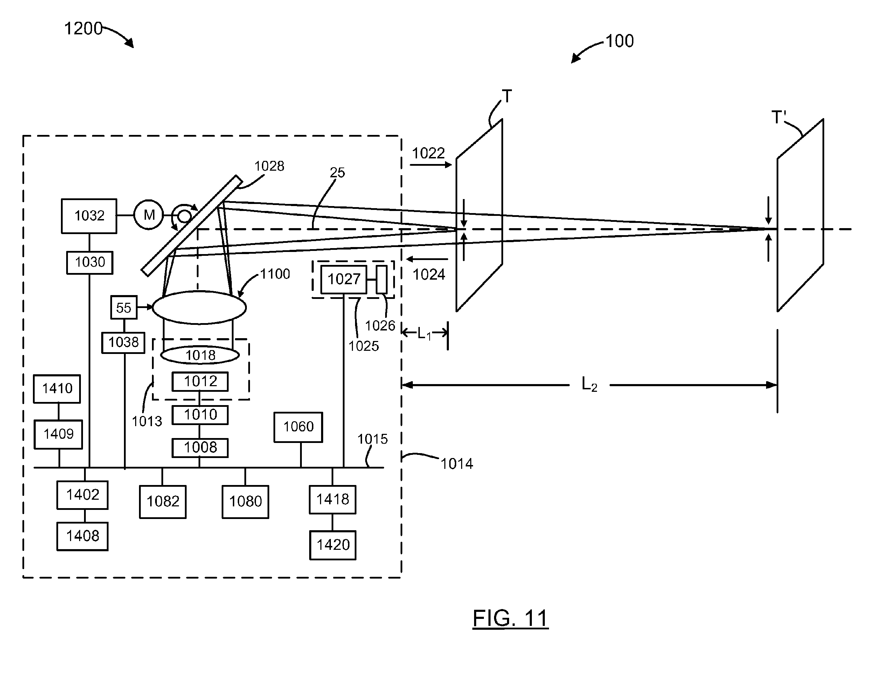

Another exemplary hardware platform for use in, e.g., the terminals 100 and 300, is illustrated and described with reference to the schematic block diagram of Fig. 11. Referring to FIG. 11, an indicia reading terminal 1000 includes a laser source 1012 supported by a hand held housing 1014. The laser source 1012 can emit a laser beam along an optical path, or axis 25. Laser source 1012 can be coupled to laser source control circuit 1010. Light from laser source 1012 can be shaped by collimating optics 1018 and lens assembly 1100. The combination of laser source 1012 and collimating optics 1018 can be regarded as a laser diode assembly 1013. The laser beam travels in an emitting direction 1022 along axis 25 and illuminates a target T, which in one embodiment includes a bar code. A scanning mirror reflector 1028 disposed within the optical path defined by axis 25 oscillates to direct the laser beam across the entire surface to be scanned. Reflector 1028 can be driven by scan motor, M, which is coupled to control circuit 1032.

The laser beam reflects off the target T and travels along axis 25 in a receiving direction 1024 back to a detector 1028. In the example wherein the target T includes a barcode, the incident laser light strikes areas of dark and white bands and is reflected. The reflected beam will thusly have variable intensity representative of the barcode pattern. Detector assembly 1025 including detector 1026 and analog to digital converter 1027 can receive the reflected beam of variable intensity, generate an analog signal corresponding to the reflected beam, and convert it to a digital signal for storage into memory 1080 where it can be processed by CPU 1060 in accordance with a program stored in non-volatile memory 1082, provided in a particular example by an EPROM.

For attempting to decode a bar code symbol, CPU 1060 can process a digitized image signal corresponding to a scanned, reflected, and detected laser beam to determine a spatial pattern of dark cells and light cells and can convert each light and dark cell pattern determined into a character of character string via table lookup. Terminal 1000 can include various interface circuits allowing CPU 1060 to communicate with various circuits of terminal 1000 including interface circuit 1008 coupled to circuit 1010 and system bus 1015, interface circuit 1030 coupled to motor control circuit 1032, and interface circuit 1038 coupled to electrical power input unit 55. Terminal 1000 can also include trigger 1408 which can be actuated to initiate a decode attempt. Manual trigger 1408 can be coupled to interface circuit 1402, which in turn can be coupled to system bus 1015. Terminal 1000 can also include a display 1420 in communication with CPU 1060 via interface 1418 as well as pointer mechanism 1410 in communication with CPU 1060 via interface 1409 coupled to system bus 1015.

Referring to further aspects of indicia reading terminal 1000, terminal 1000 can include electrical power input unit 55 for inputting of energy for changing an optical characteristic of focusing apparatus 1200, and therefore changing an optical characteristic (e.g., focal length, plane of optimal focus) of lens assembly 1100. In one embodiment, an energy input to lens assembly 1100 can be varied to vary a plane of optimum focus of a laser beam that is shaped by optics 1018, 1100, 1028. A plane (or distance) of optimum focus of a projected laser beam can be varied between a first distance L₁ of optimum focus and a second distance L₂ of optimum focus.

In view of the foregoing, one or more of the hardware platforms (e.g., the hardware platforms 900, 1000) can be implemented on the various indicia reading terminals discussed above and contemplated herein. These hardware platforms and other components, circuitry, and the like can be configured to permit the end user of the terminal to implement any one of the changes discussed above and provided within the scope, spirit, and content of the present disclosure.

It is contemplated that numerical values, as well as other values that are recited herein are modified by the term "about", whether expressly stated or inherently derived by the discussion of the present disclosure. As used herein, the term "about" defines the numerical boundaries of the modified values so as to include, but not be limited to, tolerances and values up to, and including the numerical value so modified. That is, numerical values can include the actual value that is expressly stated, as well as other values that are, or can be, the decimal, fractional, or other multiple of the actual value indicated, and/or described in the disclosure.

While the present invention has been particularly shown and described with reference to certain exemplary embodiments, it will be understood by one skilled in the art that various changes in detail may be effected therein without departing from the spirit and scope of the invention as defined by claims that can be supported by the written description and drawings. Further, where exemplary embodiments are described with reference to a certain number of elements it will be understood that the exemplary embodiments can be practiced utilizing either less than or more than the certain number of elements.

Among the apparatus and methods set forth herein there is set forth herein:
A1. A method for configuring an indicia reading terminal, said method comprising:
   initiating capture of data from a decodable indicia;
   determining whether the decodable indicia is present,
   wherein if the decodable indicia is not present,
      initiating a configurable mode comprising a plurality of pre-determined configurations, and
      implementing a configuration change in response to a selection from among the pre-determined configurations,
   wherein the pre-determined configuration is identified by an operator initiated command, and
   wherein the operator initiated command is generated via a trigger control disposed on the indicia reading terminal.
A2. A method according to A1, wherein the operator initiated command comprises a first command to initiate the capture and a second command to identify the pre-determined configuration.
A3. A method according to A1, wherein the operator initiated command comprises a sequence of trigger signals indicative of variable actuation of the trigger control.
A4. A method according to A1, wherein the trigger control is disposed on a handle of the indicia reading terminal.
A5. A method according to A4, wherein the configuration change modifies operation of the indicia reading terminal as between a presentation mode and a manual trigger mode. A6. A method according to A1, further comprising activating an indicator to signal the configuration change.
A7. A method according to A1, further comprising receiving a trigger signal generated by actuation of the trigger control, monitoring a measure of the trigger signal, and entering the configurable mode when the measure varies from a pre-determined threshold value.
A8. A method according to A7, wherein the pre-determined threshold value comprises a time period for activation of the trigger signal.
A9. A method according to A1, further comprising monitoring a light threshold value and entering the configurable mode when the measure varies from a pre-determined threshold value.
A10. A method according to A1, further comprising capturing in response to the operator initiated command a frame of image data of a target on which the decodable indicia may be located.
A11. A method according to A1, further comprising activating in response to the operator initiated command a laser source to illuminate with laser light a target on which the decodable indicia may be located.
A12. A method according to A1, wherein if the decodable indicia is present, initiating the configurable mode in response to a mode-changing indicia.
B1. A method for configuring an indicia reading terminal, comprising:
   identifying a trigger signal;
   activating a data capture device in response to the trigger signal;
   detecting a mode change prompt;
   enabling a configurable mode on the indicia reading terminal in response to the mode change prompt; and
   applying in the configurable mode a pre-determined configuration in response to an operator initiated command generated via a trigger control disposed on the indicia reading terminal.
B2. A method according to A1, wherein the mode change prompt is encoded in a decodable indicia.
B3. A method according to A1, wherein the pre-determined configuration is selected from a plurality of pre-determined configurations, and wherein the selection is made responsive to a scroll signal.
B4. A method according to B3, wherein the scroll signal comprises one or more of a single actuation of a trigger control and a sequence of actuations of the trigger control.
C1. A system, comprising:
   an indicia reading terminal comprising a data capture device that is configured to capture information encoded in a decodable indicia, an actuation device coupled to the data capture device, and a housing encapsulating the data capture device and the actuation device;
   wherein the system is operative in response to an operator initiated command to initiate a configurable mode comprising a plurality of pre-determined configurations,
   wherein the system is further operative to implement a configuration change in response to a selection from among the pre-determined configurations,
   wherein the pre-determined configuration is identified by a scroll signal, and
   wherein the scroll signal and the operator initiated command are generated via a trigger control disposed on the indicia reading terminal.
C2. A system according to C1, further comprising an external server in communication with the indicia reading terminal, wherein the external server is external to the indicia reading terminal, and wherein the pre-determined configurations are stored on the external server.
C3. A system according to C1, wherein the data capture device comprises an imaging module.
C4. A system according to C1, wherein the data capture device comprises a laser module.

## Claims

1. A method for configuring an indicia reading terminal, said method comprising:
initiating capture of data from a decodable indicia;
determining whether the decodable indicia is present,
wherein if the decodable indicia is not present,
initiating a configurable mode comprising a plurality of pre-determined configurations, and
implementing a configuration change in response to a selection from among the pre-determined configurations,
wherein the pre-determined configuration is identified by an operator initiated command, and
wherein the operator initiated command is generated via a trigger control disposed on the indicia reading terminal.

2. A method according to claim 1, wherein the operator initiated command comprises a first command to initiate the capture and a second command to identify the pre-determined configuration.

3. A method according to claim 1, wherein the operator initiated command comprises a sequence of trigger signals indicative of variable actuation of the trigger control.

4. A method according to claim 1, further comprising activating an indicator to signal the configuration change.

5. A method according to claim 1, further comprising receiving a trigger signal generated by actuation of the trigger control, monitoring a measure of the trigger signal, and entering the configurable mode when the measure varies from a pre-determined threshold value.

6. A method according to claim 1, further comprising monitoring a light threshold value and entering the configurable mode when the measure varies from a pre-determined threshold value.

7. A method according to claim 1, further comprising capturing in response to the operator initiated command a frame of image data of a target on which the decodable indicia may be located.

8. A method according to claim 1, further comprising activating in response to the operator initiated command a laser source to illuminate with laser light a target on which the decodable indicia may be located.

9. A method according to claim 1, wherein if the decodable indicia is present, initiating the configurable mode in response to a mode-changing indicia.

10. A method for configuring an indicia reading terminal, comprising:
identifying a trigger signal;
activating a data capture device in response to the trigger signal;
detecting a mode change prompt;
enabling a configurable mode on the indicia reading terminal in response to the mode change prompt; and
applying in the configurable mode a pre-determined configuration in response to an operator initiated command generated via a trigger control disposed on the indicia reading terminal.

11. A method according to claim 8, wherein the mode change prompt is encoded in a decodable indicia.

12. A method according to claim 8, wherein the pre-determined configuration is selected from a plurality of pre-determined configurations, and wherein the selection is made responsive to a scroll signal.

13. A system, comprising:
an indicia reading terminal comprising a data capture device that is configured to capture information encoded in a decodable indicia, an actuation device coupled to the data capture device, and a housing encapsulating the data capture device and the actuation device;
wherein the system is operative in response to an operator initiated command to initiate a configurable mode comprising a plurality of pre-determined configurations,
wherein the system is further operative to implement a configuration change in response to a selection from among the pre-determined configurations,
wherein the pre-determined configuration is identified by a scroll signal, and
wherein the scroll signal and the operator initiated command are generated via a trigger control disposed on the indicia reading terminal.

14. A system according to claim 13, further comprising an external server in communication with the indicia reading terminal, wherein the external server is external to the indicia reading terminal, and wherein the pre-determined configurations are stored on the external server.
